# EUROPEAN PATENT SPECIFICATION

(11) **EP 1 503 129 B1**
(45) Date of publication and mention of the grant of the patent: **08.06.2011**
(21) Application number: 04026362.6
(22) Date of filing: 14.04.1998
(51) Int. Cl.: F16L 19/10

(54) **Ferrule with relief to reduce galling**
Hülse mit Ausnehmung zum Minimieren von Abriebverschleiss
Virole à relief permettant de réduire l'éraillure

(30) Priority: 15.04.1997 US 834255; 02.04.1998 US 54186
(43) Date of publication of application: 02.02.2005
(62) Divisional of application: 98918092.2
(73) Proprietor: Swagelok Company, Solon, OH 44139 (US)
(72) Inventor: Williams, Peter C., Cleveland Heights OH 44121 (US); Kuhns, Howard C.B., Aurora OH 44202 (US); McMillan, David A., Streetsboro OH 44241 (US)
(74) Representative: Neill, Alastair William

(56) References cited:
- FR-A- 757 204
- US-A- 2 701 149
- US-A- 3 103 373
- US-A- 3 250 550
- US-A- 3 888 522

## Description

### Background of the Invention

The subject invention is directed to the art of ferrule type tube fittings. More particularly, the invention concerns a two ferrule fitting wherein the rear ferrule is designed to reduce the torque required to rotate the associated nut and to also reduce galling between the rear ferrule and the interior surface of the drive nut.

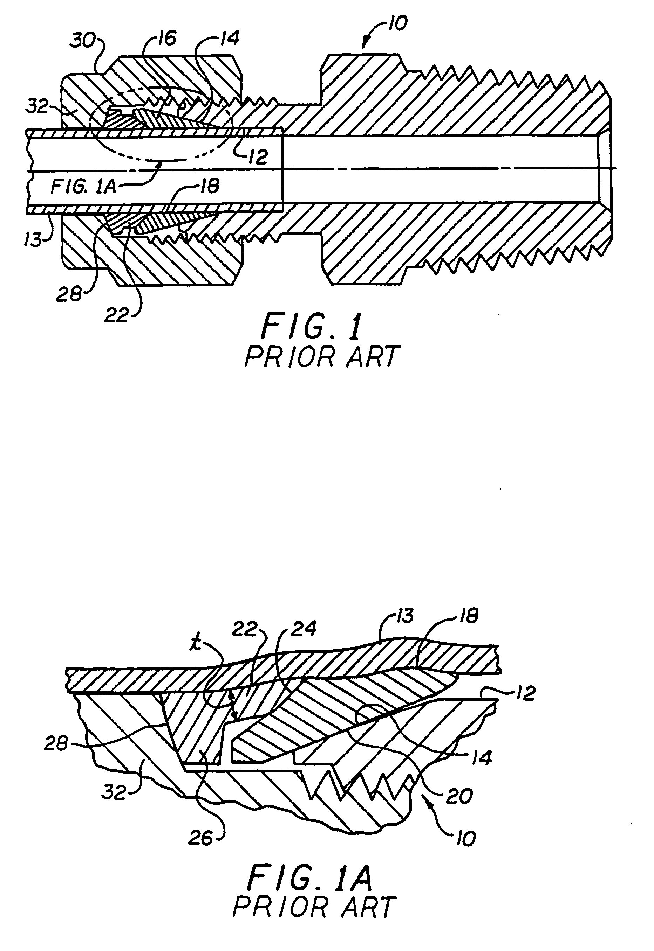

A commercially available and highly successful two ferrule fitting used for tubing is illustrated in FIGS. 1 and 1A. FIG. 1 shows the fitting components in a finger tight position preparatory to final tightening, whereas FIG. 1A shows the fitting after final tightening. As shown, the fitting comprises a body **10** having a cylindrical opening **12** counterbored for receiving tube end **13.** A tapered, frusto-conical camming mouth **14** is located at the axial outer end of the counterbore. A front ferrule **16** having a smooth, cylindrical inner wall **18** is closely received on the tube. The front ferrule has a frusto-conical outer surface **20** to be received in the camming mouth.

Associated with the front ferrule **16** and located axially outward therefrom is a rear ferrule **22** configured as shown with a tapered nose portion **24** and a rear flange **26** having an inclined end surface **28.** The tapered nose enters a tapered camming surface in the rear surface of the front ferrule.

The ferrules **16, 22** are enclosed by a drive nut member **30** threaded to the body. During tightening and make-up of the fitting, the inner end face, flange, or shoulder **32** of the nut acts against the rear wall of the rear ferrule to drive the ferrules forwardly into the fully engaged position shown in FIG. 1A.

The small diameter portion or nose of the rear ferrule is dimensioned so that it plastically deforms during make-up of the fitting. This action is desirable since it results in tight gripping engagement of the outer wall of the tubing. The thickness of the nose portion cannot be reduced to an extent that the rear ferrule deforms too much and only the rear ferrule adequately grips the outer wall of the tubing. That is, the two ferrule assembly requires desired deformation of both the front and rear ferrules for the gripping and sealing capabilities that have made this two ferrule assembly a commercially successful product. On the other hand, the thickness of the nose of the rear ferrule cannot be enlarged to such an extent that it results in a structural arrangement that is too stiff and does not permit the desired rear ferrule deformation.

Accordingly, it will be recognized by those skilled in the art that a predetermined wall thickness of the nose of the rear ferrule is desired that achieves the desired gripping of the tube and cooperates with the front ferrule in such a manner that it achieves its desired goals of gripping and sealing the tube.

It is also recognized that operators of fluid systems test the system prior to a production run by pressurizing the system to an appropriate factor times the rated system pressure. In this manner, the operator can easily detect whether the fluid system is sealed, i.e. that there are no leaks. With this knowledge, the manufacturer can provide a fitting in which the nose of the rear ferrule will not have any additional plastic deformation at the elevated test pressure. Accordingly, the elevated test pressure is used to determine the desired wall thickness of the nose portion of the rear ferrule to achieve the desired amount of deformation of the nose and permit the front and rear ferrules to properly grip and seal with the outer wall of the tube.

It has also been found that galling of the drive nut sometimes occurs in the drive face area of engagement between the inner end face of the drive nut and the rear wall of the rear ferrule. After analysis, it is believed that the axial thrust or pull-up force between the front and rear ferrule is essentially parallel to the axis of the fitting. This axial thrust causes the rear corner region of the rear ferrule to selectively concentrate pull-up force at the inside drive surface of the nut particularly in a localized area to produce the galling. This also noticeably increases the nut torque forces experienced during make-up even if galling is absent. Accordingly, it would be highly desirable to provide a design wherein the thrust forces do not produce the high localized loading with the resultant galling and high torque forces.

US 2701149 discloses a high-pressure pipe coupling having a tubular terminal coupling member forming a radially extending annular seat for receiving in abutment therewith the radially extending annular end of a substantially radially non-deformable pipe to be coupled therewith. The coupling also includes a device for securing said pipe in fluid- and pressure-tight assembly with said terminal coupling member. This device comprises a first tubular sealing element which has an annular sealing and cutting edge, an annular axially movable first pressure member, a second tubular sealing element having a portion forming an annular sealing and cutting edge, and a second annually axially removable pressure member. However, this coupling is reliant on sealing elements cutting into the pipe to effect a seal therewith.

US-A-3103373 discloses a back ferrule, the front terminus of which provides a generally flat radial front face merged with a tapered surface by a smoothly curved apical zone.

### Summary of the Invention

In accordance with the present invention, there is provided a method for installing a rear ferrule in a two ferrule tube fitting onto a tube end wherein said rear ferrule includes an inner generally cylindrical wall that closely surrounds the tube end outer wall, comprising the steps of: a) positioning the rear ferrule on a tube end outer wall between a drive member drive surface and a front ferrule; and b) using the drive member to axial drive a tapered nose of the rear ferrule into a tapered recess in the facing end of the front ferrule to produce a cam action on the rear ferrule nose to grip the tube end outer wall; characterized by: the step of axially driving the rear ferrule includes the steps of producing a substantial radial component in the pull up force acting on the drive member, and reducing force concentrations on the drive member drive surface by having an initial contact between the drive surface and the rear ferrule at a location that is radially spaced from the tube wall, with said radial component causing the rear ferrule nose portion to deform radially inward so that a portion of the inner generally cylindrical wall portion that is adjacent a front end of said rear ferrule is radially deformed inward into a tight gripping engagement with the tube end outer wall; the step of forming a circumferential recess in the inner generally cylindrical wall and located between front and back ends of the rear ferrule; the step of forming a contoured surface on a back wall of the rear ferrule that engages the drive surface during pull-up of the fitting; and wherein the contoured surface is convex.

These and other aspects and advantages of the present invention will be apparent to those skilled in the art from the following description of the preferred embodiments in view of the accompanying drawings.

### Brief Description of the Drawings

The invention may take physical form in certain parts preferred embodiments which will be described in detail in this specification and illustrated in the accompanying drawings which form a part hereof, and wherein:
FIG. 1 is a longitudinal cross-sectional view of a well known prior art two ferrule swage-type fitting;
FIG. 1A is an enlarged view of the circled area of FIG. 1 showing the prior art fitting in a made-up condition;
FIG. 2 is a view like FIG. 1 but showing a fitting incorporating a modified rear ferrule designed to improve reaction force transmission through the rear ferrule not according to the present invention;
FIG. 3 is a greatly enlarged showing of the circled area of FIG. 2;
FIG. 4 is a detailed, partial cross-sectional view of a rear ferrule not according to the present invention;
FIG. 5 is a cross-sectional view similar to FIG. 4 showing a second form for the rear ferrule not according to the present invention;
FIG. 6 is a cross-sectional view of the fitting of FIG. 1 particularly showing the rear ferrule positioned between the front ferrule and the nut at initial make-up (graphically meshed for finite element analysis);
FIG. 7 is a view of the fitting of FIG. 6 in a made-up condition and illustrating the force concentrations;
FIG. 8 is a cross-sectional view of a fitting at initial make-up including a rear ferrule modified not in accordance with the teachings of the invention (graphically meshed for finite element analysis);
FIG. 9 is a view of the fitting of FIG. 8 in a made-up condition and illustrating the force concentrations;
FIG. 10 is a cross-sectional view of a fitting at initial make-up including a rear ferrule modified not in accordance with the teachings of the invention (graphically meshed for finite element analysis);
FIG. 11 is a view of the fitting of FIG. 10 in a made-up condition and illustrating the force concentrations;
FIG. 12 is a cross-sectional view of a fitting at initial make-up including a rear ferrule modified not in accordance with the teachings of the invention (graphically meshed for finite element analysis);
FIG. 13 is a view of the fitting of FIG. 12 in a made-up condition and illustrating the force concentrations;
FIG. 14 is a table of different geometrical variations of the rear ferrule configuration;
FIG 15 is a cross-sectional view of an embodiment of a two ferrule fitting according to the present invention;
FIG. 16 is an enlarged view of the ferrule region of the embodiment of FIG. 15;
FIG. 17 is a partial view of a rear ferrule with a contoured face in accordance with one aspect of the invention;
FIG. 18 is a partial view of a contoured rear ferrule shown in the engaged position with a front ferrule and drive nut surfaces prior to pull up;
FIG. 19 is a view of the embodiment of FIG. 18 in the pulled up condition showing force distributions;
FIG. 20 is another embodiment of the rear ferrule;
FIG. 21 illustrates force distributions in a two ferrule fitting not in accordance with the present invention that does not use a contoured rear ferrule; and
FIG. 22 illustrates another embodiment of a rear ferrule design not according to the present invention incorporating a circumferential recess.

### Detailed Description of the Preferred Embodiments

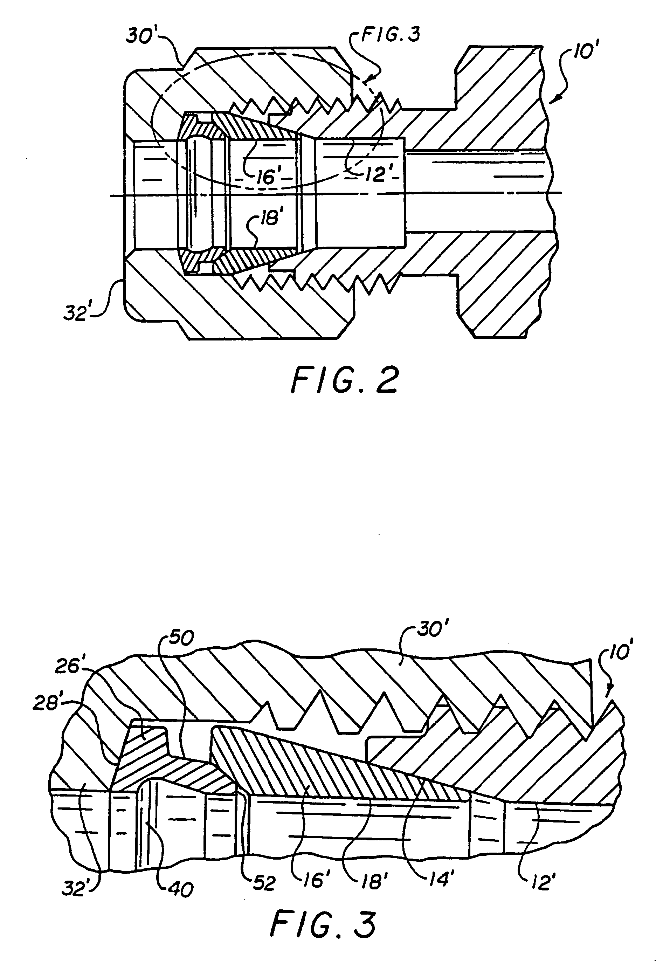

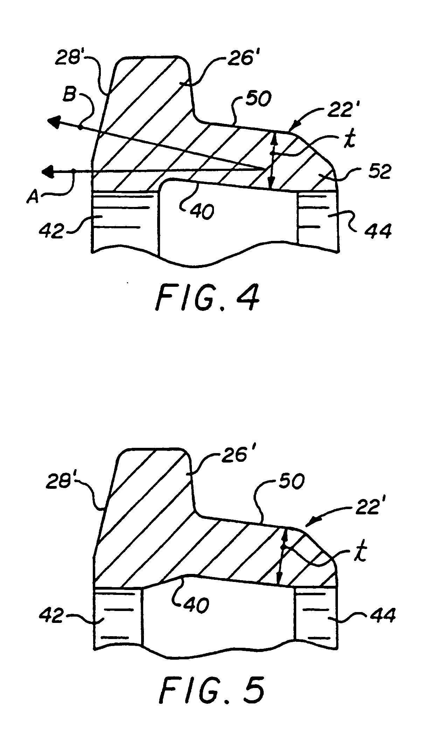

Referring now to the drawings wherein the showings are for the purposes of illustrating preferred embodiments of the invention only and not for purposes of limiting same, FIGS. 2-4 illustrate the overall arrangement of a fitting not according to the invention. The FIGS. 2-4 embodiment has the major components identified with the same reference numerals used with respect to the description of the prior art device of FIGS. 1 and 1A. A description of a FIG. 1 element is to be taken as equally applicable to the FIGS. 2-4 elements that are correspondingly numbered unless otherwise noted. In particular, in the FIGS. 2-4 embodiment, the rear ferrule **22'** has been modified in a manner to cause the reaction forces acting between the front ferrule through the rear ferrule to the nut to have a significant force component that is directed radially outward. This is in contradistinction to the FIGS. 1 and 1A embodiment wherein the force component under consideration has a high axial component. Specifically, as shown in FIG. 4, force component A extends generally axially of the rear ferrule **22'** and results in an increase in the loads applied at the radial inner face of the ferrule surface **28'** and the flange **32'** of the nut. As previously discussed, high localized loading or force concentration in this area produces high torque and galling.

A redirection of the reaction forces is achieved by providing a circumferential recess **40** throughout the inner surface of the ferrule **22'.** Note that a recess **40** is located generally midway between the opposite ends of the ferrule **22'** and this results in the inner surface of the rear ferrule being reduced to two relatively narrow contact areas **42** and **44.** By so modifying the rear ferrule, the forces which are conducted from the front ferrule through the rear ferrule to the nut surface or flange **32'** tend to be directed more radially outward such as diagrammatically illustrated by the force line **B** of FIG. 4.

Another important feature is best exemplified by comparing the rear ferrule of FIG. 1 with the rear ferrule of the FIGS. 2-4 embodiment. Particularly, the outer radial wall **50** of the rear ferrule includes a conical section that increases in radial dimension as it extends from the forward nose portion, that is received in the rear chamfer region **52** of the front ferrule, to the rear flange **26'.** In the prior art arrangement of FIGS. 1 and 1A, the rear ferrule has a cylindrical through bore and an outer radial wall that extends parallel to the inner surface defining the through bore in this region. In other words, the rear ferrule has a constant annular wall thickness **"t".** In the embodiment of FIGS. 2-4, the outer wall has the conical or tapered configuration that provides sufficient wall thickness **"t"** and controlled deformation of the nose portion when the recess is incorporated into the modified rear ferrule. Preferably, the outer wall **50** has a generally uniform angle or taper as it extends between the reduced dimension nose region **52** received in the camming mouth of the front ferrule and the enlarged diameter rear flange **26'.** Again, this provides controlled deformation of the rear ferrule so that the region **52** is plastically deformed radially inward along surface **44** into gripping, sealed engagement with the outer wall of the tube.

FIG. 5 illustrates another embodiment of the rear ferrule in which the recess **40** has is defined by two different angles (an obtuse triangle). For example, the smaller first angle defined with the inner surface increases as it extends rearwardly from the surface **44** toward the rear flange **26'.** The larger second angle (approximately twice the angular dimension of the first angle) increases as it extends forwardly from the surface **42** toward the nose region. These angles thus intersect at an axial position that is located beneath the intersection of the outer wall **50** with the rear flange. Accordingly; the forces are more evenly distributed over the rear face **28'.**

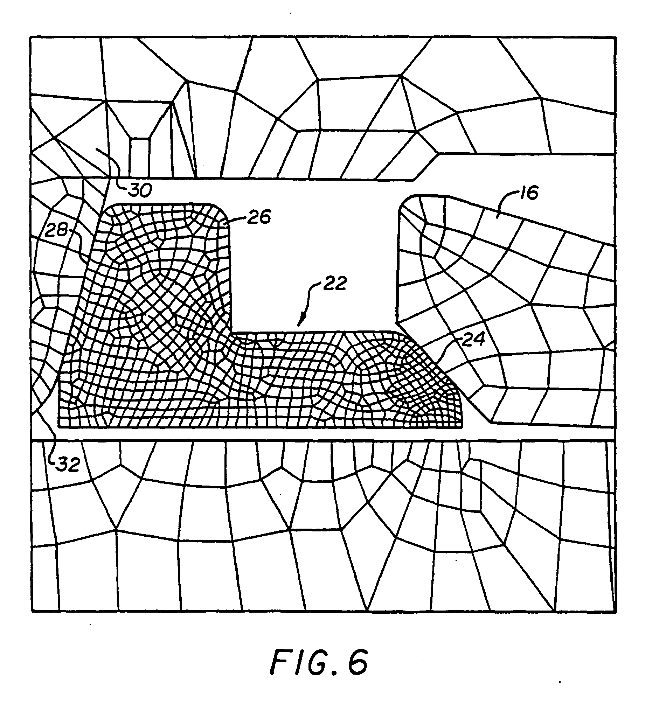

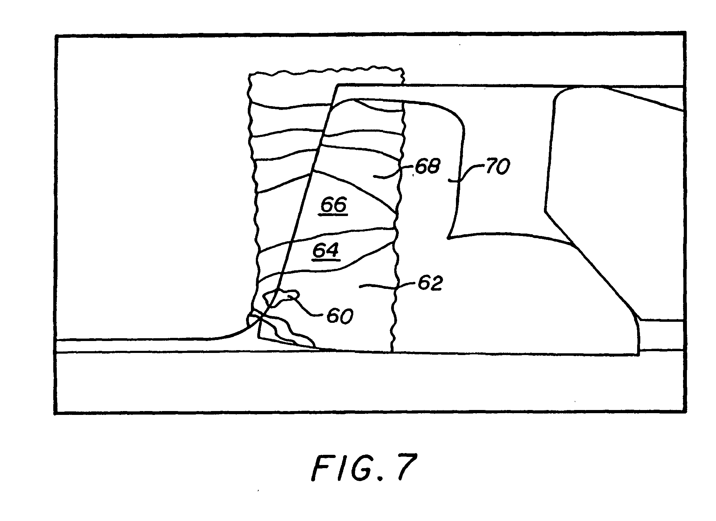

Turning to FIGS. 6 and 7, the rear ferrule of the prior art arrangement of FIG. 1 is shown before and after make-up of the fitting. The fitting was subjected to a finite element analysis, the results of which are particularly evident in FIG. 7. There, shaded regions in the rear flange of the rear ferrule and the nut evidence the force and stress concentrations encountered upon make-up of the fitting. Particularly; a region of high stress concentration is designated at area **60.** Regions of progressively decreased stress concentration are identified by numerals **62, 64, 66, 68,** and **70.** Thus, the large stress concentration at the radial inner location of the rear face **28'** results in increased torque during make-up and potential galling of the nut.

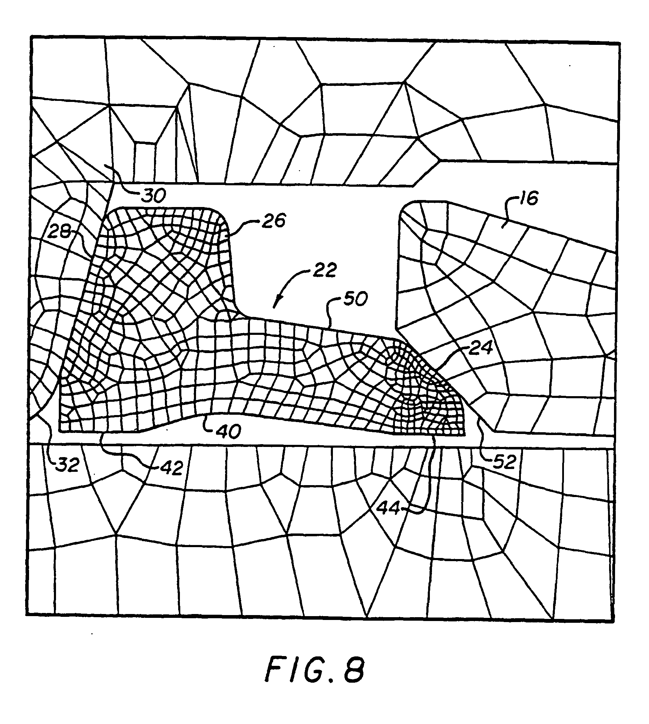

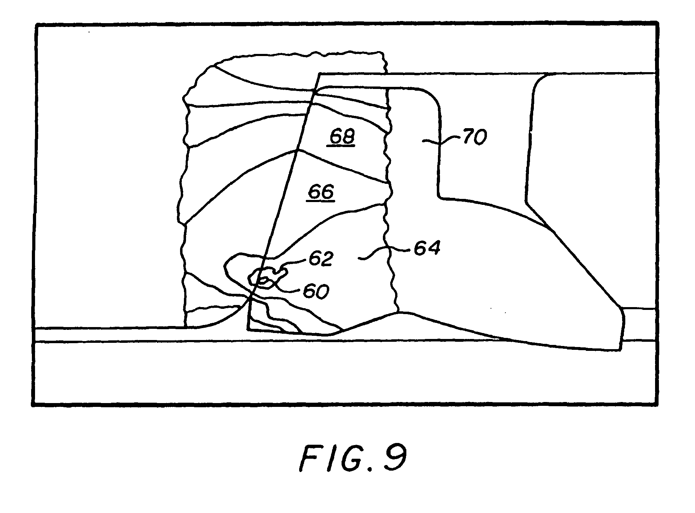

FIGS. 8 and 9 show another modified rear ferrule. This rear ferrule is the same as shown in FIG. 5. As particularly evident in FIG. 9, the region of high stress concentration is substantially reduced in size when compared to FIG. 7. This indicates that the forces have been more uniformly dispersed over the rear face of the flange of the rear ferrule. Thus, the torque is reduced and the potential for galling is likewise reduced.

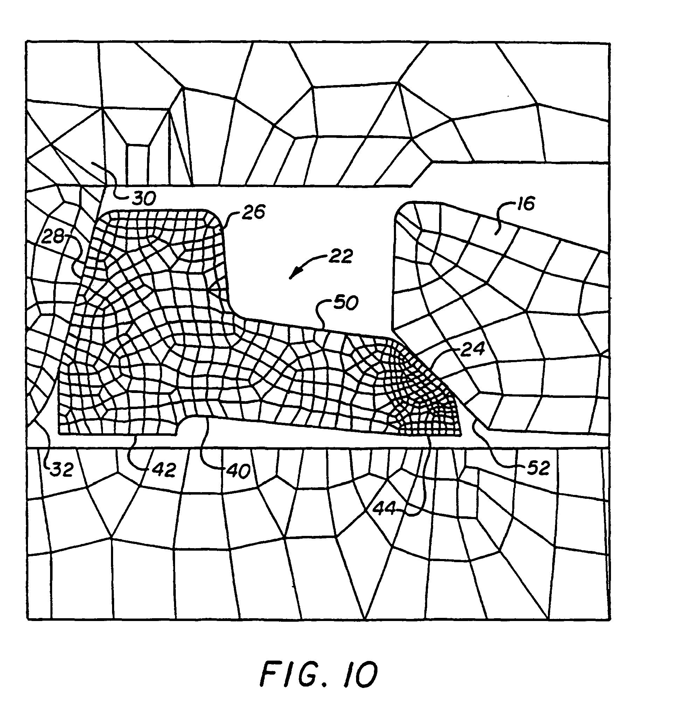

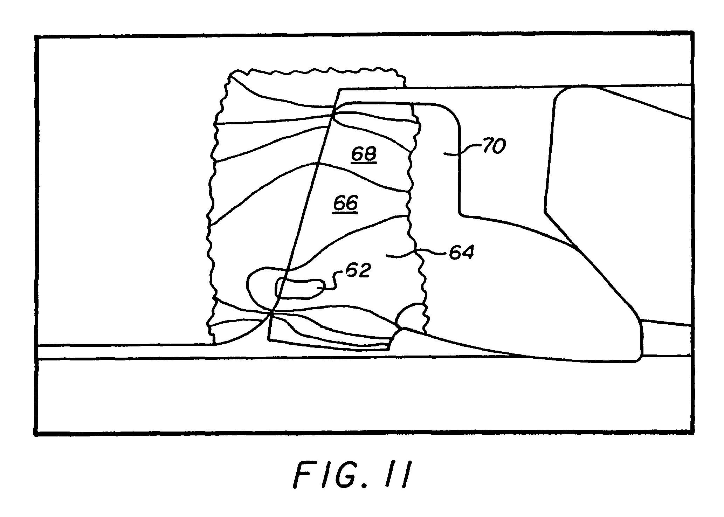

FIGS. 10 and 11 represent the rear ferrule shown and described in FIG. 4. Here, the finite element analysis illustrates that the region of high stress concentration is substantially removed at the rear face and a more uniform distribution of forces obtained. Again, the torque forces associated with make-up are thus reduced with the corresponding reduction in localized force concentrations. The recess and conical outer wall provide a radial component to the forces generated in the fitting and transferred through the rear ferrule while still providing a desired gripping and sealing of the tube.

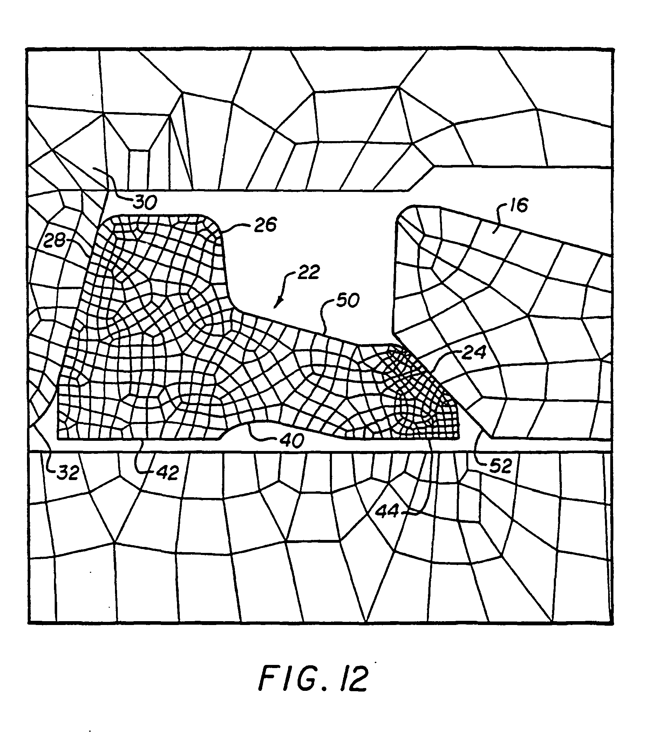

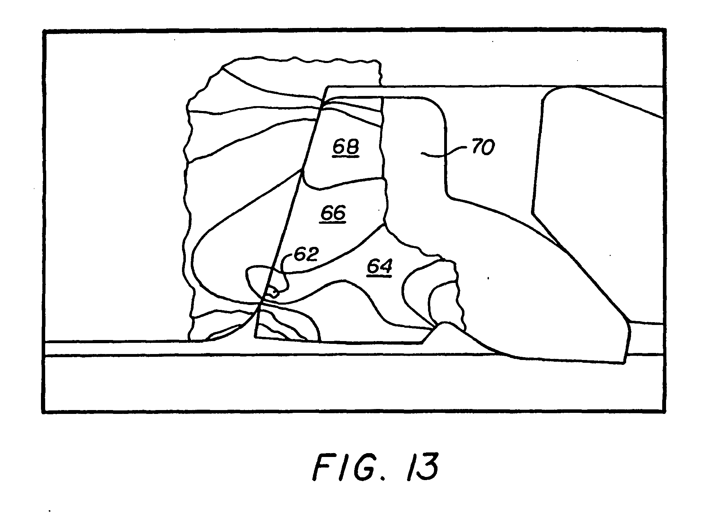

The embodiment of FIGS. 12 and 13 also achieves these same objectives. The recess is of a slightly different configuration, i.e., the recess is more sharply defined in the inner wall of the rear ferrule. It is also shifted slightly forwardly so that the deepest portion of the recess is located forwardly of the rear flange. However, the outer wall is still of conical configuration and in conjunction with the recess distributes the forces along the rear face of the rear ferrule.

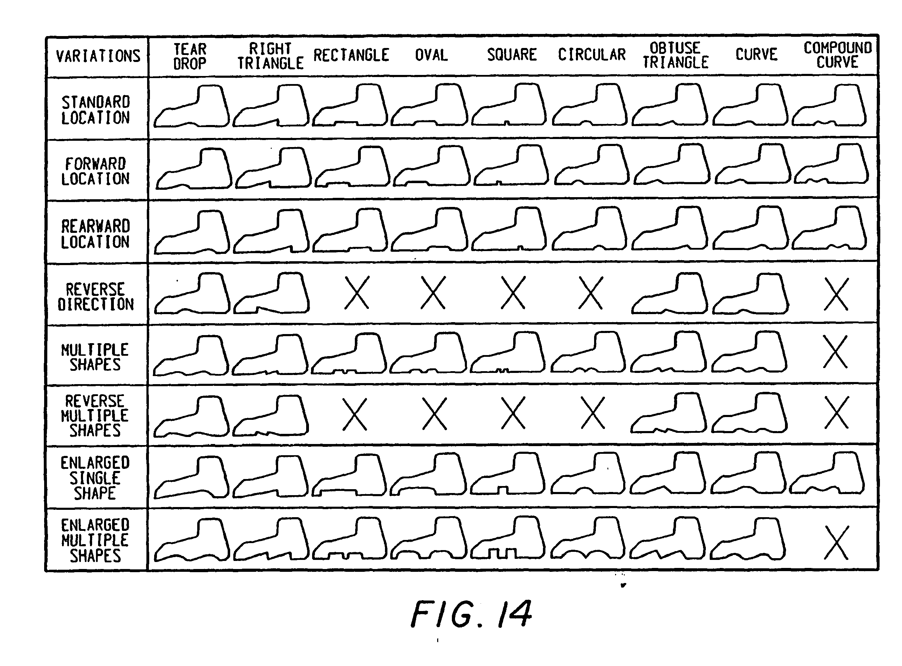

As is apparent with the various embodiments described above, the recess and the tapered outer wall do not require a particular conformation to achieve the force distribution and reduced torque for make-up of the fitting. In fact, a number of proposed alternative embodiments are illustrated in table form in FIG. 14. For example, the first row of geometries have a standard location that is generally defined as the rear edge of the recess being located axially beneath the intersection of the outer wall and the enlarged flange. The tear drop, right triangle, rectangle, oval, square circular, obtuse triangle, curve, and compound curve are various shapes that the recess may adopt. Moreover, the recess can be positioned at a forward location (second row), or a rearward location where the deepest portion of the recess is positioned beneath the enlarged flange (third row) while still adopting the various configurations. Still further, the orientation of the shapes can be reversed as demonstrated by the various geometries in the fourth row or the sixth row, or the recess may be defined by multiple recesses as shown in the geometries of the fifth and eighth rows. Alternatively, the recess(es) may be enlarged as indicated in the seventh and eighth rows.

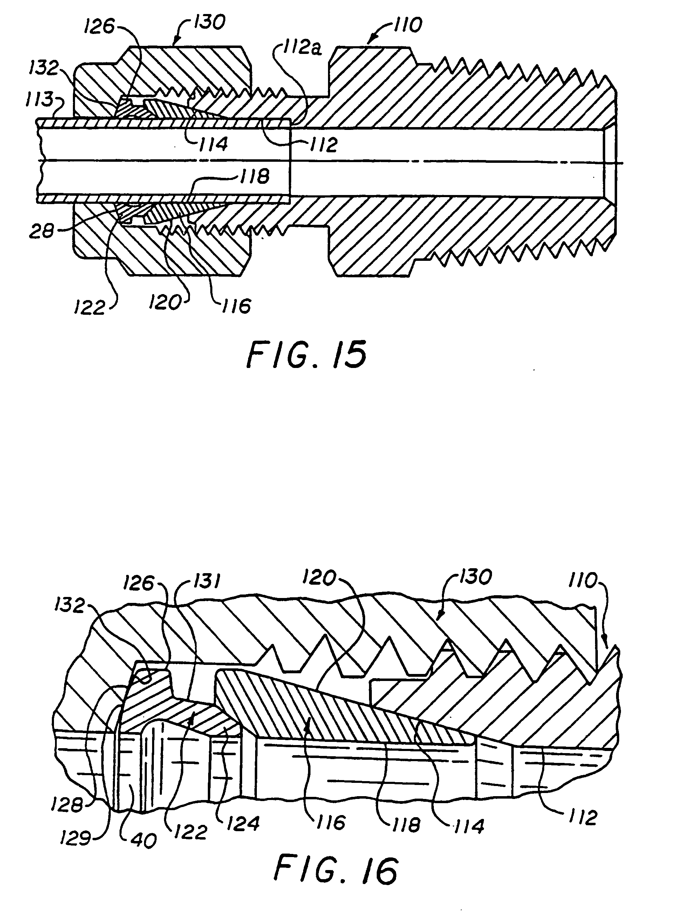

With reference to FIGS. 15-20, an embodiment of the invention is illustrated. As noted herein above, the use of a recess 40 in the rear ferrule 22 significantly reduces force concentrations at the drive surface 32 of the drive nut 30 by adding a radial component to the pull up forces. The provision of the tapered outer wall 50 further can contribute to the radial component and force distribution, as well as controlled deformation of the rear ferrule 22 during pull up. In accordance with the embodiments of FIGS. 15-20, the rear ferrule is provided with a contoured drive surface that further reduces force concentrations in the area of engagement between the drive nut 30 and the rear ferrule 22.

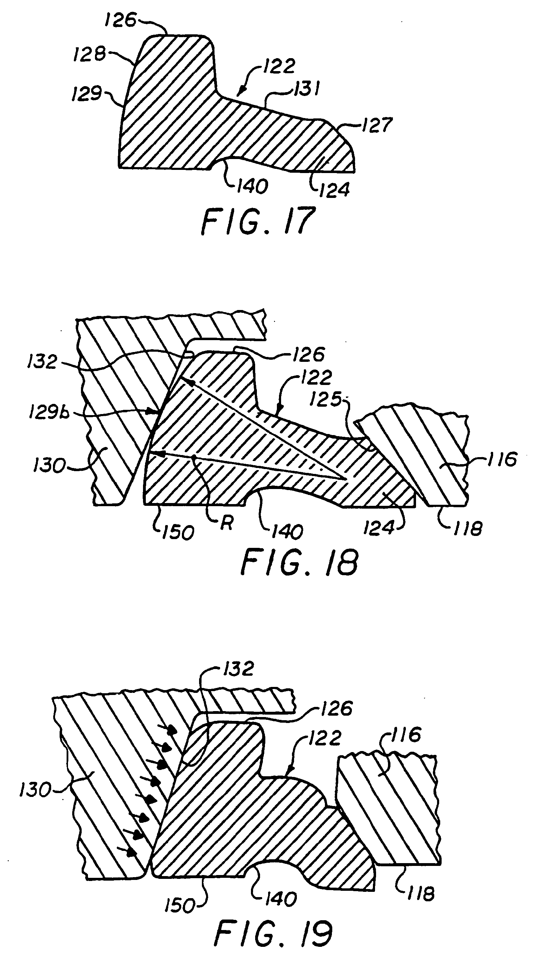

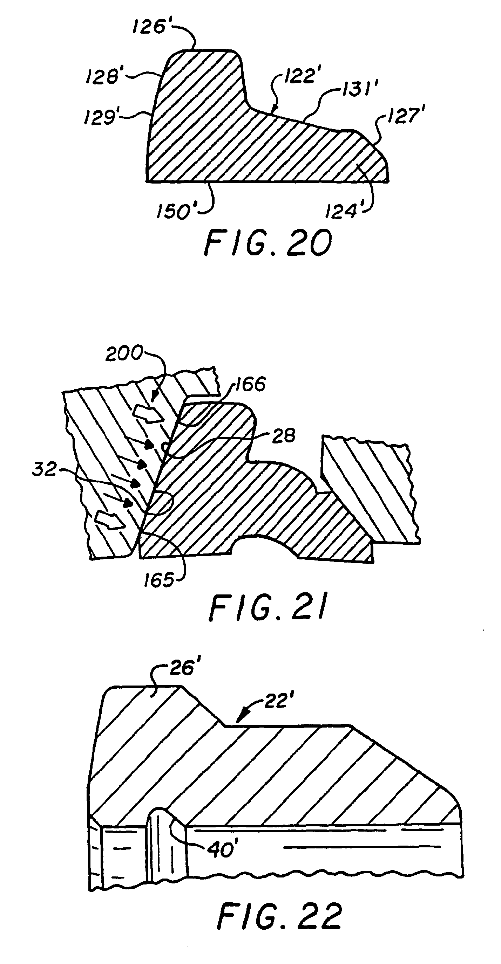

FIG. 21 illustrates in an exemplary manner typical pull up force distributions at the dive nut drive surface 32 and the rear ferrule drive surface 28, typical in cases that incorporate a recess 40 type structure in the rear ferrule as described herein before. These force concentrations are represented by the arrows 200. By comparing the force distributions of FIG. 21 and the force concentrations in FIG. 7 (FIG. 7 being illustrative of a rear ferrule that does not include a recess-type structure) it is evident that the provision of the recess configuration significantly and substantially reduces force concentration on the drive nut drive surface 32. This reduction in force concentrations is further evident from a comparison of FIG. 7 with FIGS. 9, 11 and 13. However, as further illustrated in FIG. 21, in some cases there still may be localized force concentrations, particularly on the radial inner and outer portions of the rear ferrule flange 26. These somewhat higher bi-modal force concentrations are represented by the heavier arrows. The present invention is thus directed to further reducing such force concentrations, with the results illustrated in FIG. 19, wherein the force arrows signify a substantial elimination of pull up force concentrations using a modified rear ferrule drive surface and the recessed inner radius.

In accordance with the present invention a two ferrule fitting is shown having a rear ferrule which is modified so as to reduce further the pull up force concentrations by substantially distributing the force concentration along the rear surface that engages the drive surface 32 of the drive nut 30. As is shown in FIGS. 15-18, corresponding fitting components are shown in finger-tight position preparatory to final tightening.

With specific reference to FIGS. 15 and 16, the fitting comprises a body 110 having a cylindrical opening 112 for receiving a tube end 113 that bottoms on a counterbore 112a. A tapered, frusto-conical cam mouth 114 is located at the axial rear or receiving end of the opening 112. A front ferrule 116 having a smooth, cylindrical, radially inner wall 118 is closely received on the tube 113. The front ferrule 116 has a tapered outer surface 120 which engages the tapered mouth 114 of the body 110.

Associated with the front ferrule 116 and located axially adjacent (i.e., in a rearward direction concentrically aligned with the longitudinal axis of the fitting) is a rear ferrule 122 configured with a tapered nose portion 124 having a rearward, tapered surface 127. The rear ferrule 122 also includes a radially extending rear flange 126 having a contoured end face 128. The contoured face 128 includes a rearward-facing driven surface 129 which is engaged by a respective driving surface 132 of the drive nut 130.

The tapered nose surface 127 of the rear ferrule 122 engages and may have, but not necessarily, substantially the same angle as a tapered cam surface 125 in the rear area of the front ferrule 116. The nose portion 124 is joined with the flange 126 by a preferably tapered outer wall 131. In the illustrated embodiment the wall 131 tapers with an increasing radial dimension in the axially rearward direction. The outer wall 131 could also be cylindrical, although it is preferred to be tapered to further facilitate reduction of force concentrations on the rear surface 129.

The ferrules 116 and 122 are enclosed by a threaded drive nut member 130 which includes a drive surface 132 that engages the contoured face 129 of the rear ferrule 122. The nut member 130 threadably engages a threaded portion of the body 110. During tightening and make-up of the fitting, the drive surface 132 of the nut 130 applies pull up forces against the contoured face 129 of the rear ferrule 122 to drive both ferrules axially forward (to the right as viewed in FIG. 16) into the fully engaged position shown in FIG. 19. The rear ferrule is configured so that upon forced engagement with the tapered cam surface 125, the nose portion 124 deforms radially inward. This action is desirable since it results in a tight gripping engagement of the rear ferrule 122 inner cylindrical wall with the outer surface of the wall of the tubing 113.

In the embodiments illustrated in FIGS. 15-20, the contoured face 128 of the rear ferrule 122 is rounded, curved, arcuate, or bowed, and has a portion of which is a contour in the form of a convex radius R. The center of the radius can be, for example, internal to the ferrule body as shown in FIG. 18. However, those skilled in the art will readily appreciate that the origin of the radius surface 129 can be located anywhere with respect to the rear ferrule structure with the illustration of FIG. 18 being provided for illustrative purposes only. One aspect of the contoured face 128 is that with the driven surface 129 in the form of a convex radius, a line contact 129b (or reduced face to face radial contact) is formed initially with the nut drive surface 132, in a region between the inner and outer radial portions of the flange 126. The rear ferrule also includes a recess 140 which can be of any configuration as previously described herein above.

A distinct advantage of the contoured rear ferrule 122 is that pull up forces between the nut drive surface 132 and the contoured face 128 of the rear ferrule 122 are more uniformly distributed across the surface 128 of the rear ferrule, thus reducing and substantially eliminating force concentrations. This further reduction of force concentrations on the drive nut 130 reduces pull up torque and reduces galling, thus facilitating re-make of the fitting.

It is important to note that although the illustrated embodiments show an initial contact between the rear ferrule 122 and the drive nut 130 as generally in the middle of the contoured face 128, this is not required in every application. The initial point of contact will be a function of the overall fitting design, including the geometry of the tapered wall 131, the recess 140, the nose portion 127, the front ferrule 116 configuration and so forth. But in keeping with a general aspect of the invention, the contoured face 128 will be convex or axially variant in the region between the radial inner and outer portions of the flange 126 so as to distribute more uniformly the pull up forces acting on the drive nut 132 to reduce galling and pull up torque as compared to a conventional rear ferrule design that has a substantially flat non-contoured driven surface 128.

FIG. 20 illustrates an embodiment in which the rear ferrule 122' has a substantially cylindrical inner wall 150', but otherwise includes the flange 126' having a contoured driven surface 128' and a nose portion 124' with a front bevel 127 and a tapered outer wall 131'.

Fig. 22 illustrates another embodiment not according to the invention wherein the rear ferrule 22' design for larger tubes such as ½" for example, can have the recess 40' shifted axially rearward, generally within the axial dimension of the flange 26'.

The invention has been described with reference to the preferred embodiment. Obviously, modifications and alterations will occur to others upon a reading and understanding of this specification. It is intended to include all such modifications and alterations insofar as they come within the scope of the appended claims.

## Claims

1. A method for installing a rear ferrule (122) in a two ferrule tube fitting onto a tube end wherein said rear ferrule (122) includes an inner generally cylindrical wall that closely surrounds the tube end outer wall, comprising the steps of:
a) positioning the rear ferrule (122) on a tube end outer wall between a drive member (130) drive surface (132) and a front ferrule (116); and
b) using the drive member (130) to axial drive a tapered nose (124) of the rear ferrule (122) into a tapered recess in the facing end of the front ferrule (116) to produce a cam action on the rear ferrule nose to grip the tube end outer wall; **characterized by**:
the step of axially driving the rear ferrule (122) includes the steps of producing a substantial radial component in the pull up force acting on the drive member (132), and reducing force concentrations on the drive member drive surface (132) by having an initial contact between the drive surface (132) and the rear ferrule (122) at a location that is radially spaced from the tube wall, with said radial component causing the rear ferrule nose portion (124) to deform radially inward so that a portion of the inner generally cylindrical wall portion that is adjacent a front end of said rear ferrule (122) is radially deformed inward into a tight gripping engagement with the tube end outer wall;
the step of forming a circumferential recess (140) in the inner generally cylindrical wall and located between front and back ends of the rear ferrule (122);
the step of forming a contoured surface (128) on a back wall (128) of the rear ferrule (122) that engages the drive surface (132) during pull-up of the fitting; and
wherein the contoured surface (128) is convex.

## Patentansprüche

1. Verfahren zum Installieren einer hinteren Hülse (122) in ei n e m zwei Hülsen umfassenden Rohrverbinder an ein Rohrende, wobei die hintere Hülse (122) eine allgemein zylindrische Innenwand enthält, die die Außenwand des Rohrendes eng umgibt, mit den folgenden Schritten:
a) Positionieren der hinteren Hülse (122) an eine Außenwand de s Rohrendes zwischen einer Antriebsfläche (132) eines Antriebsglieds (130) und einer vorderen Hülse (116); und
b) Verwenden des Antriebsglieds (130) zum axialen Antrieb einer sich verjüngenden Nase (124) der hinteren Hülse (122) in eine sich verjüngende Aussparung im zugekehrten Ende der vorderen Hülse (116), um eine Nockenwirkung an der Nase der hinteren Hülse zum Ergreifen der Außenwand des Rohrendes zu erzeugen;
**gekennzeichnet durch** den Schritt des axialen Antriebs der hinteren Hülse (122), de r die Schritte de s Erzeugens einer wesentlichen radialen Komponente in der auf das Antriebsglied (130) wirkenden Anziehkraft und Verringerns von Kraftkonzentrationen auf der Antriebsfläche (132) des Antriebsglieds **durch** Vorsehen eines anfänglichen Kontakts zwischen der Antriebsfläche (132) und der hinteren Hülse (122) an einer Stelle, die radial von der Rohrwand beabstandet ist, umfasst, wobei die radiale Komponente bewirkt, dass sich der Nasenteil (124) der hinteren Hülse radial nach innen verformt, so dass ein Teil des allgemein zylindrischen Innenwandteils, der sich neben einem Vorderende der hinteren Hülse (122) befindet, radial nach innen zu einem dichten Greifeingriff mit der Außenwand des Rohrendes verformt wird;
den Schritt des Ausbildens einer Umfangsaussparung (140) in der allgemein zylindrischen Innenwand, die sich zwischen dem vorderen und hinteren Ende der hinteren Hülse (122) befindet;
den Schritt de s Ausbildens einer konturierten Fläche (128) an einer Rückwand (128) der hinteren Hülse (122), die die Antriebsfläche (132) während des Anziehens des Verbinders in Eingriff nimmt; und
wobei die konturierte Fläche (128) konvex ist.

## Revendications

1. Procédé pour installer une virole arrière (122), dans un raccord de tube à deux viroles, sur une extrémité de tube, dans lequel ladite virole arrière (122) comporte un e paroi interne généralement cylindrique qui entoure intimement la paroi externe de l'extrémité du tube, comprenant les étapes consistant à :
a) positionner la virole arrière (122) sur une paroi externe de l'extrémité du tube entre une surface d'entraînement (132) d'un organe d'entraînement (130) et une virole avant (116) ; et
b) utiliser l'organe d'entraînement (130) pour entraîner axialement un nez effilé (124) sur la virole arrière (122) dans un retrait effilé dans l'extrémité en regard de la virole avant (116) pour produire une action de came sur le nez de la virole arrière afin de saisir la paroi externe de l'extrémité du tube ;
**caractérisé par:**
**le fait que** l'étape consistant à entraîner axialement la virole arrière (122) inclut les étapes consistant à produire une composante substantiellement radiale dans la force de traction agissant sur l'organe d'entraînement (130), et à réduire les concentrations de force sur la surface d'entraînement (132) de l'organe d'entraînement en ayant un contact initial entre la surface d'entraînement (132) et la virole arrière (122) en un emplacement espacé radialement de la paroi du tube, ladite composante radiale amenant la portion de nez (124) de la virole arrière à se déformer radialement vers l'intérieur de telle sorte qu'une portion de la portion de paroi interne généralement cylindrique qui est adjacente à une extrémité avant de ladite virole arrière (122) soit déformée radialement vers l'intérieur en engagement de préhension serré avec la paroi externe de l'extrémité du tube ;
l'étape consistant à former u n retrait circonférentiel (140) dans la paroi interne généralement cylindrique et situé entre les extrémités avant et arrière de la virole arrière (122) ;
l'étape consistant à former une surface profilée (128) sur une paroi arrière (128) de la virole arrière (122) qui s'engage avec la surface d'entraînement (132) au cours de la traction du raccord ; et
la surface profilée (128) étant convexe.
